# FASCICULE DE BREVET EUROPEEN

(11) **EP 2 781 382 B1**
(45) Date de publication et mention de la délivrance du brevet: **24.10.2018**
(21) Numéro de dépôt: 14160546.9
(22) Date de dépôt: 18.03.2014
(51) Int. Cl.: B60H 3/02, B61C 3/00, B61C 17/04

(54) **Véhicule à traction électrique comportant un ensemble à humidité contrôlée pour alimenter ou commander un dispositif électrique du véhicule, et procédé correspondant.**
Elektrisches Zugfahrzeug, das eine Einheit mit kontrollierter Feuchtigkeit enthält, um eine elektrische Vorrichtung des Fahrzeugs mit Strom zu versorgen oder zu steuern, und entsprechendes Verfahren
Electric traction vehicle comprising an assembly with controlled humidity for supplying or controlling an electrical device of the vehicle, and corresponding method

(30) Priorité: 22.03.2013 FR 1352606
(43) Date de publication de la demande: 24.09.2014
(73) Titulaire: ALSTOM Transport Technologies, 93400 Saint-Ouen (FR)
(72) Inventeur: Lempegnat, Cedric, 64290 BOSDARROS (FR); Quentin, Nicolas, 65420 IBOS (FR)
(74) Mandataire: Lavoix

(56) Documents cités:
- EP-B1- 1 851 083
- WO-A1-2010/126681
- DE-A1-102011 005 253
- FR-A1- 2 697 789

## Description

La présente invention concerne un véhicule selon le préambule de la revendication 1.

L'invention concerne aussi un procédé correspondant.

Un engin de traction ferroviaire, du type à traction électrique, comporte, en général en toiture, un ou plusieurs pantographes et une pluralité d'appareils électriques à haute tension pour alimenter ou commander des dispositifs électriques incluant par exemple un moteur. La pluralité d'appareils électriques comprend par exemple un disjoncteur monophasé 25 kV/15 kV, un sectionneur de mise à la terre, un commutateur monophasé/continu, un transformateur de palpage et/ou un capteur de tension, un sectionneur de la ligne haute tension et un ou plusieurs transformateurs de courant et/ou un ou des capteurs de courant.

Pour l'isolation externe des appareils électriques de l'ensemble, il est connu de les isoler individuellement par des matériaux isolants dont la forme extérieure comporte plusieurs ailettes, les appareils électriques étant en outre placés de manière à obtenir des distances d'isolement suffisantes entre eux ou par rapport à la masse du train ou un gabarit électrique. Les distances d'isolement sont importantes pour faire face à un environnement pollué, par exemple par des dépôts de poussière conductrice ou non, la pluie, la neige. Les isolateurs ou enveloppes isolantes équipés d'ailettes sont fragiles et susceptibles d'être détériorés en service, par exemple par des projections de pierres ou pendant les opérations de maintenance. En outre, les dimensions de l'ensemble sont importantes.

Le document EP-B-1 851 083 décrit un ensemble dans lequel les appareils électriques sont au moins partiellement encapsulés dans une isolation solide, par exemple une résine, complétée d'une isolation par un liquide. Ceci permet de s'affranchir des isolants à ailettes et rend l'ensemble plus compact, mais aussi complexe, coûteux et d'une maintenance peu aisée.

Le document FR-A-2 697 789 décrit un ensemble dans lequel les appareils électriques forment un bloc unique disposé dans une enceinte hermétique remplie d'un gaz diélectrique, tel que l'hexafluorure de soufre. Ceci permet également de s'affranchir des isolants à ailettes et d'obtenir un ensemble plus compact. Toutefois, l'ensemble obtenu est d'une mise en oeuvre complexe et sa maintenance nécessite des moyens adaptés.

Enfin, la firme Sécheron a développé un ensemble connu sous le nom de AC MODBOX® dans lequel les appareils électriques sont abrités dans une enceinte non hermétique remplie d'air. Un tel ensemble est d'une mise en oeuvre aisée, mais il existe un risque de condensation d'eau dans l'enceinte. Aussi, les distances d'isolement à respecter sont importantes. Les appareils électriques incorporés sont de type classique, pour faire face à un environnement potentiellement humide. L'ensemble est relativement volumineux et lourd.

Le document DE-A-10 2011005 253 décrit un véhicule ferroviaire comportant un transformateur et un dispositif de refroidissement du transformateur. Le dispositif de refroidissement est situé dans la caisse du véhicule.

Un but de l'invention est de fournir un véhicule du type précité, comportant un ensemble qui soit moins volumineux, tout en restant d'une mise en oeuvre aisée.

A cet effet, l'invention a pour objet un véhicule selon la revendication 1.

Selon des modes particuliers de réalisation, le véhicule peut comprendre l'une ou plusieurs des caractéristiques correspondant aux revendications 2 à 9 et des caractéristiques suivantes, prise(s) isolément ou selon toutes les combinaisons techniquement possibles :
- l'ensemble est destiné à être raccordé à une source de puissance électrique par au moins un pantographe ;
- les appareils électriques forment un ensemble monobloc. Les raccordements entre les appareils électriques sont alors internes, ce qui facilite leur intégration. L'invention concerne enfin un procédé selon la revendication 10.

L'invention sera mieux comprise à la lecture de la description qui va suivre, donnée uniquement à titre d'exemple, et faite en se référant aux dessins annexés, sur lesquels :
- la Figure 1 est une vue de côté représentant schématiquement un véhicule ferroviaire selon un premier mode de réalisation de l'invention ;
- les Figures 2 à 5 sont des vues schématiques d'ensembles appartenant à des véhicules ferroviaires respectivement selon un deuxième, un troisième, un quatrième et un cinquième modes de réalisation de l'invention.

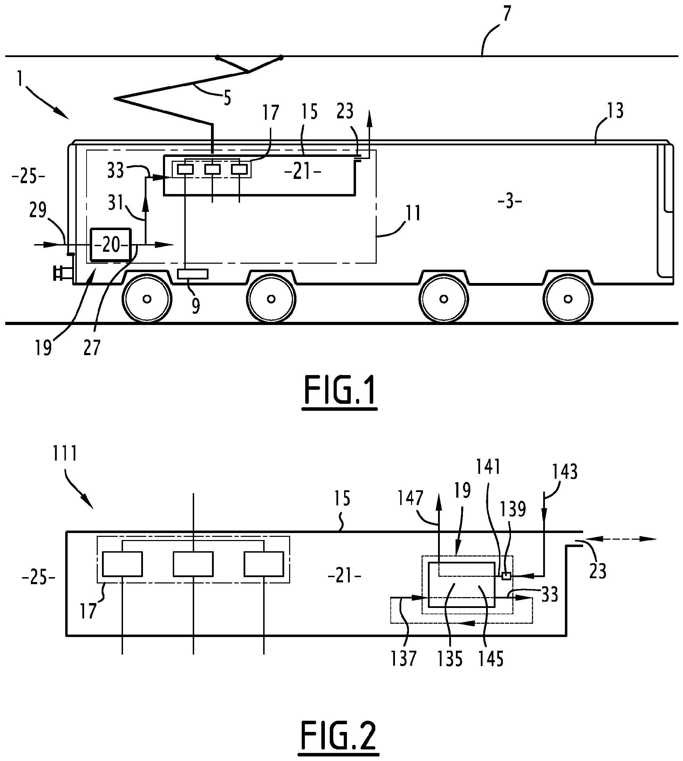

En référence à la Figure 1, on décrit un véhicule ferroviaire 1. Le véhicule ferroviaire 1 est par exemple un engin de traction électrique attelé à d'autres véhicules ferroviaires (non représentés) pour former une rame.

Le véhicule ferroviaire 1 comprend une caisse 3, et un pantographe 5 connecté électriquement à une caténaire 7 formant une source de puissance électrique pour le véhicule ferroviaire. Le véhicule ferroviaire 1 comprend aussi un dispositif électrique 9, par exemple un moteur électrique, et un ensemble 11 pour alimenter ou commander le dispositif électrique 9.

La caisse 3 définit un toit 13 du véhicule ferroviaire 1.

L'ensemble 11 comprend une enceinte 15, une pluralité d'appareils électriques 17 situés dans l'enceinte 15, et un dispositif de déshumidification 19 pour déshumidifier l'enceinte 15.

L'ensemble 11 comporte avantageusement au moins un capteur (non représenté) pour mesurer un taux d'humidité dans l'enceinte 15.

L'enceinte 15 définit un volume interne 21 autour des appareils électrique 17. L'enceinte 15 est non hermétique. Par « non hermétique », on entend que l'enceinte 15 comprend au moins un passage 23 mettant le volume interne 21 en communication fluidique avec l'extérieur de l'enceinte.

L'enceinte 15 se situe à proximité du toit 13 de la caisse 3. En variante (non représentée), elle se situe sur le toit 13.

En variante (non représentée), l'enceinte 15 se situe à l'intérieur ou sous la caisse 3.

De manière connue en soi, l'enceinte 15 comprend, par exemple, un boîtier en aluminium et un couvercle (non représentés). L'enceinte comporte des soufflets (non représentés) pour le passage d'organes de commande ou de câbles. Certains organes de commande (non représentés) sont par exemple placés directement dans l'enceinte 15.

Le volume interne 21 est rempli d'air que l'on qualifiera « d'air interne », par opposition à l'air ambiant 25 situé à l'extérieur de l'enceinte 15.

Le capteur précité est configuré pour mesurer le taux d'humidité de l'air interne de l'enceinte 15.

Le passage 23 permet à l'air interne de s'échapper de l'enceinte 15 ou à l'air ambiant 25 d'entrer dans l'enceinte. Le passage 23 est par exemple une simple ouverture.

En variante, le passage 23 est une soupape (non représentée). Selon une autre variante (non représentée), le passage 23 résulte de fuites naturelles dues à un assemblage non hermétique par conception.

Par « haute tension », on entend par exemple une tension d'au moins 1 kV. A titre d'exemple, la pluralité d'appareils électrique 17 comprend, de manière connue en soi, des éléments (non représentés) pris parmi la liste suivante:
- un disjoncteur monophasé fonctionnant en 25 kV/15 kV
- un sectionneur de mise à la terre,
- un commutateur monophasé/continu,
- un transformateur de palpage et/ou un capteur de tension
- un sectionneur de la ligne haute tension, et
- un ou plusieurs transformateurs de courant et/ou un ou des capteurs de courant.

Au moins l'un des appareils électriques 17 est connecté électriquement au dispositif électrique 9.

Le déshumidificateur 19 est, dans le premier mode de réalisation, une unité d'air comprimé 20 pour le véhicule ferroviaire 1. Le déshumidificateur 19 comprend un compresseur et un sécheur (non représentés) pour produire un flux d'air comprimé 27 pour le véhicule ferroviaire 1 à partir d'un flux d'air ambiant 29. Le déshumidificateur 19 comprend en outre une canalisation 31 pour amener un flux d'air 33 dans le volume interne de l'enceinte 15. Sauf en ce qui concerne une partie terminale de la canalisation 31, le déshumidificateur 19 est situé à l'extérieur de l'enceinte 15.

Le flux d'air 33 est constitué par une fraction de l'air comprimé et séché produit par l'unité d'air comprimé.

Le flux d'air 33 produit est moins humide que l'air ambiant 25. Par exemple, le point de rosée du flux d'air 33 produit est inférieur à la température ambiante, de préférence inférieur à -25°C.

La canalisation 31 comprend des organes de détente pour ajuster la pression et le débit du flux d'air 33 débouchant dans l'enceinte 15.

Le fonctionnement du véhicule ferroviaire 1 et de l'ensemble 11 va maintenant être décrit.

Les appareils électriques 17 sont alimentés électriquement à partir de la caténaire 7 via le pantographe 5. Puis, au moins l'un des appareils électriques 17 alimente le dispositif électrique 9, qui est dans l'exemple un moteur.

Le déshumidificateur 19 produit, à partir de l'air ambiant 25, de l'air comprimé et séché destiné à faire fonctionner divers équipements (non représentés) du véhicule ferroviaire 1. Une partie de l'air comprimé et séché produit par le déshumidificateur 19 transite par la canalisation 31 et débouche dans le volume interne 21 de l'enceinte 15. Il se produit un mélange d'air dans le volume interne 21. L'apport d'air comprimé et séché dans l'enceinte 15 crée une légère surpression dans l'enceinte. La surpression provoque l'échappement d'une fraction de l'air interne par le passage 23 et empêche l'entrée d'air ambiant 25.

L'apport dans l'enceinte 15 d'air moins humide que l'air ambiant 25 permet de contrôler le taux d'humidité de l'air interne à une valeur définie, comprise entre le taux d'humidité de l'air ambiant 25 et le taux d'humidité de l'air comprimé et séché produit par le déshumidificateur 19. La valeur contrôlée est ajustable notamment en modifiant le débit du flux d'air 33. Plus le débit du flux d'air injecté est élevé, plus la valeur contrôlée du taux d'humidité de l'air interne baisse.

Selon un mode particulier, le débit du flux d'air 33 est ajusté en permanence en vue d'obtenir un taux d'humidité prédéterminé dans l'enceinte 15, par exemple compris entre 40% et 80 % d'humidité relative.

Selon un autre mode particulier, le débit du flux d'air 33 est sensiblement constant. Le débit du flux d'air 33 est par exemple compris entre 10 et 40 Nl/minute. Par « Nl », ou « litres normaux », on entend une quantité d'air occupant un volume de 1 litre dans les conditions normales de température et de pression (273,15 K et 1 atmosphère).

Grâce aux caractéristiques décrites ci-dessus, le taux d'humidité de l'air interne est contrôlé, de sorte qu'il est possible de réduire les distances d'isolement des appareils électriques 17. Ceci permet de réduire les dimensions de l'enceinte 15. L'ensemble 11 est donc moins volumineux. Le prélèvement d'une partie de l'air comprimé et séché destiné au véhicule ferroviaire 1 pour obtenir le flux d'air 33 injecté dans l'enceinte 15 est en outre d'une mise en oeuvre aisée.

Par ailleurs, il est possible d'utiliser des appareils électriques 17 destinées à des atmosphères moins humides que l'air ambiant 25. Ceci permet de réduire la masse de l'ensemble 11.

L'utilisation d'une partie de l'air comprimé et séché destiné au véhicule ferroviaire 1 présente l'avantage de contrôler l'humidité sans ajouter de nouvelle fonction dédiée, un gain de coût et de fiabilité est ainsi réalisé.

En référence aux Figures 2 à 5, on va maintenant décrire des véhicules ferroviaires constituant d'autres modes de réalisation de l'invention. Les véhicules ferroviaires comprennent respectivement des ensembles 111, 211, 311, 411 visibles respectivement sur les Figures 2 à 5. Le reste des véhicules ferroviaires n'est pas représenté, étant par exemple identique au véhicule 1 représenté sur le Figure 1 et privé de l'ensemble 11.

Les ensembles 111, 211, 311, 411 sont analogues à l'ensemble 11 représenté sur la Figure 1 et fonctionnent de manière analogue. Les ensembles 111, 211, 311, 411 sont propres à produire le flux d'air 33 moins humide que l'air ambiant 25.

Aussi, seules les différences seront décrites ci-après. Les éléments similaires sont désignés par des références similaires et ne seront pas décrits à nouveau.

En référence à la Figure 2, le déshumidificateur 19 de l'ensemble 111 est situé à l'intérieur de l'enceinte 15. Le déshumidificateur 19 comprend une unité de séchage 135, connue en soi, pour sécher un flux d'air interne 137, et un organe de chauffage 139, également connu en soi, pour produire à flux d'air chaud 141 à partir d'un flux d'air externe 143.

Le flux d'air externe 143 provient de l'air ambiant 25.

L'unité de séchage 135 comprend un matériau 145 absorbeur d'humidité, par exemple de l'alumine ou du gel de silice, sur lequel est destiné à passer le flux d'air interne 137 à sécher. L'unité de séchage 135 comprend aussi des moyens pour faire passer le flux d'air chaud 141 sur le matériau 145 et pour collecter un flux d'air 147 résiduel chargé d'eau et destiné à être évacué hors de l'enceinte 15.

L'unité de séchage 135 et l'organe de chauffage 139 sont situés à l'intérieur de l'enceinte 15.

Selon un autre mode de réalisation particulier (non représenté), l'unité de séchage 135 et l'organe de chauffage 139 sont situés à l'extérieur de l'enceinte 15.

Le fonctionnement du déshumidificateur 19 de l'ensemble 111 va maintenant être décrit.

Dans une étape de production, le flux d'air interne 137 à sécher passe sur le matériau 145. Une partie de l'eau contenue dans le flux d'air interne 137 est retenue dans le matériau 145. Le flux d'air 33 résiduel est collecté en sortie de l'unité de séchage 135.

Dans une étape de régénération, l'organe de chauffage 139 chauffe le flux d'air externe 143 pour obtenir le flux d'air chaud 141. Le flux d'air chaud 141 passe sur le matériau 145 et se charge en eau. Le matériau 145 est régénéré, en ce sens que l'eau qu'il retenait est emportée. Le flux d'air 147 résiduel est collecté en sortie et évacué à l'extérieur de l'enceinte 15. Le flux d'air 147 retourne à l'air ambiant 25.

De manière connue en soi, les étapes de production et de régénération sont effectuées alternativement surtout le matériau 145.

En variante, le matériau 145 est divisé en secteurs (non représentés), les étapes de production et de régénération sont effectuées simultanément sur des secteurs différents pris parmi les secteurs du matériau 145, chaque secteur différent étant soumis cycliquement à l'étape de production puis à l'étape de régénération. En variante, des cycles d'étapes plus complexes, connus en eux-mêmes, sont mis en oeuvre.

Comme le flux d'air 33 est sensiblement équivalent en débit au flux d'air interne 137, l'enceinte 15 respire naturellement par le passage 23. On entend par « respirer » le fait que de l'air interne peut s'échapper par le passage 23, ou bien de l'air ambiant 25 peut entrer dans l'enceinte 15 par le passage 23, au gré notamment des variations de température subies par l'air interne.

L'utilisation d'un déshumidificateur tel que décrit dans l'ensemble 111 présente l'avantage de contrôler l'humidité avec une grande qualité et d'assurer une régulation très rapide au démarrage de la rame.

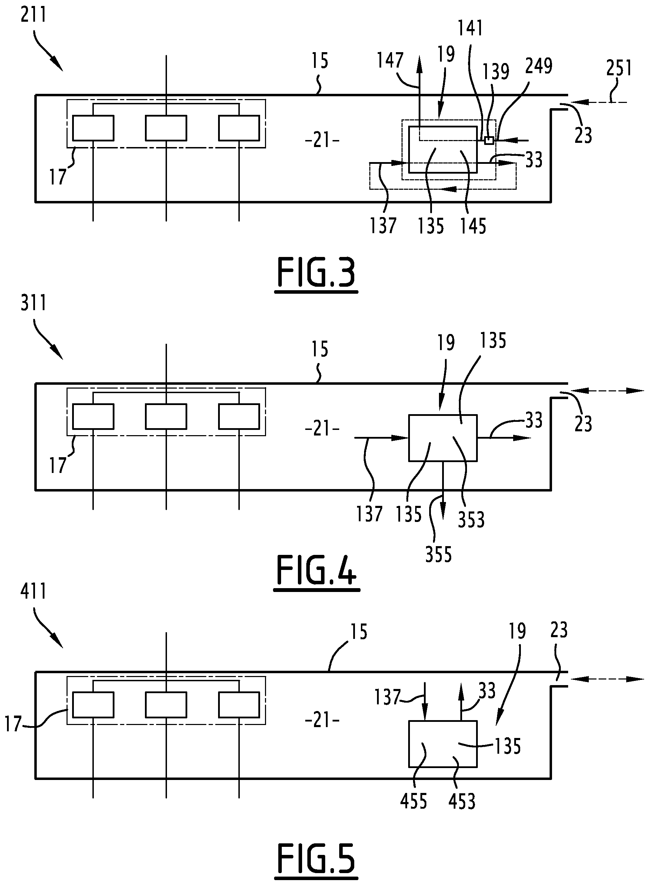

En référence à la Figure 3, le déshumidificateur 19 de l'ensemble 211 diffère du déshumidificateur 19 représenté sur la Figure 2 seulement en ce que l'organe de chauffage 139 est configuré pour chauffer un second flux d'air interne 249 afin de produire le flux d'air chaud 141.

Le fonctionnement du déshumidificateur 19 de l'ensemble 211 diffère de celui du déshumidificateur 19 de l'ensemble 111 par le fait que c'est le flux d'air interne 249 qui est chauffé pour passer sur le matériau 145 pendant l'étape de régénération, et non un flux d'air externe provenant de l'air ambiant 25.

Pendant l'étape de régénération, le déshumidificateur 19 consomme de l'air interne. Aussi, un flux d'air ambiant 251 entre dans l'enceinte 15 par le passage 23 pour compenser l'évacuation du flux d'air 147.

L'utilisation d'un déshumidificateur tel que décrit dans l'ensemble 211 présente l'avantage de limiter les orifices d'échange avec l'air ambiant 25.

En référence à la Figure 4, le déshumidificateur 19 de l'ensemble 311 diffère du déshumidificateur 19 de la Figure 3 en ce qu'il comprend un condenseur d'eau 353 pour retirer de l'eau du flux d'air interne 137 et produire le flux d'air 33. Le déshumidificateur 19 de l'ensemble 311 ne comporte pas d'organe de chauffage analogue à l'organe 139.

Le condenseur 353 est par exemple une machine frigorifique apte à refroidir le flux d'air interne 137 à une température inférieure à la température ambiante, avantageusement à -10°C.

Le condenseur 353 produit un flux d'eau liquide 355 évacué hors de l'enceinte 15.

L'enceinte 15 de l'ensemble 311 respire sensiblement comme l'enceinte 15 de l'ensemble 111.

L'utilisation d'un déshumidificateur tel que décrit dans l'ensemble 311 présente l'avantage de limiter les orifices d'échange avec l'air ambiant 25. Il permet aussi un refroidissement de l'intérieur de l'enceinte 15 qui peut compenser les échauffements générés par les appareils électriques 17.

En référence à la Figure 5, le déshumidificateur 19 de l'ensemble 411 diffère du déshumidificateur 19 de l'ensemble 211 représenté sur la Figure 3 en ce que l'unité de séchage 135 comporte une cartouche 453 pour retirer de l'eau du flux d'air interne 137 et produire le flux d'air 33. Le déshumidificateur 19 de l'ensemble 411 ne comporte pas d'organe chauffage analogue à l'organe 139, car la cartouche 453 n'est pas régénérée, mais remplacée.

La cartouche 453 contient un matériau 455 absorbeur d'humidité pour piéger de l'eau contenue dans le flux d'air interne 137 et produire le flux d'air 33.

La cartouche 453 est périodiquement remplacée par une cartouche analogue, par exemple si une saturation en eau du matériau 455 est observée. La saturation en eau se traduit par une perte d'efficacité du déshumidificateur 19.

Par «flux d'air », il faut entendre dans le présent document soit un flux d'air canalisé par convection forcée (cas du flux d'air 33 dans les ensembles 11, 111, 211, 311), soit un flux d'air qui naît par diffusion moléculaire ou convection naturelle (cas de l'ensemble 411). Dans l'ensemble 411, de l'eau contenue dans l'air interne est piégée dans le matériau 455, ce qui crée le flux d'air 33 moins humide. L'air interne s'homogénéise ensuite en taux d'humidité dans l'enceinte 15 grâce aux mouvements de l'air interne.

Le matériau 455 est par exemple de l'alumine ou du gel de silice.

L'enceinte 15 de l'ensemble 411 respire sensiblement comme l'enceinte 15 des ensembles 111 et 311.

L'utilisation d'un déshumidificateur tel que décrit dans l'ensemble 411 présente l'avantage de limiter les orifices d'échange avec l'air ambiant 25.

## Revendications

1. Véhicule (1) ferroviaire à traction électrique, comportant au moins un dispositif électrique (9) et un ensemble (11 ; 111 ; 211 ; 311 ; 411), l'ensemble (11 ; 111 ; 211 ; 311 ; 411) comprenant :
- une pluralité d'appareils électriques (17) à haute tension pour alimenter ou commander le dispositif électrique (9), et
- une enceinte (15) non hermétique à l'air ambiant (25), l'enceinte (15) contenant les appareils électriques (17) et définissant un volume interne (21) rempli d'air interne,
le véhicule étant **caractérisé en ce que** l'ensemble (11 ; 111 ; 211 ; 311 ; 411) comporte en outre un dispositif de déshumidification (19) propre à produire un flux d'air (33) moins humide que l'air ambiant (25), ledit flux d'air (33) débouchant dans le volume interne (21), l'enceinte (15) se situant à proximité d'un toit (13) défini par une caisse (3) du véhicule (1), ou sur le toit (13), ou encore à l'intérieur de ou sous la caisse (3).

2. Véhicule (1) selon la revendication 1, **caractérisé en ce que** le dispositif de déshumidification (19) comprend une unité d'air comprimé (20) pour produire de l'air comprimé et asséché (27) à partir de l'air ambiant (25), l'unité d'air comprimé (20) étant destinée à alimenter le véhicule (1) en air comprimé et asséché, le dispositif de déshumidification (19) comprenant au moins une canalisation (31) pour prélever au moins une fraction de l'air comprimé et asséché (27) et obtenir le flux d'air (33) moins humide que l'air ambiant (25).

3. Véhicule (1) selon la revendication 1, **caractérisé en ce que** le dispositif de déshumidification (19) comprend une unité de séchage (135), le flux d'air (33) produit étant issu du séchage d'un premier flux d'air interne (137) dans l'unité de séchage (135).

4. Véhicule (1) selon la revendication 3, **caractérisé en ce que** l'unité de séchage (135) comprend au moins un matériau (145 ; 455) absorbeur d'humidité pour sécher le premier flux d'air interne (137).

5. Véhicule (1) selon la revendication 4, **caractérisé en ce que** le système de déshumidification (19) comprend un organe de chauffage (139) pour produire un flux d'air chaud (141) destiné à passer au travers du matériau (145) absorbeur d'humidité afin de régénérer le matériau (145) absorbeur d'humidité, le flux d'air chaud (141) étant évacué à l'extérieur de l'enceinte (15) après son passage au travers du matériau (145) absorbeur d'humidité.

6. Véhicule (1) selon la revendication 5, **caractérisé en ce que** l'organe de chauffage (139) est configuré pour chauffer un flux d'air ambiant (143), le flux d'air chaud (141) étant obtenu par chauffage du flux d'air ambiant (143).

7. Véhicule (1) selon la revendication 5, **caractérisé en ce que** l'organe de chauffage (139) est configuré pour chauffer un second flux d'air interne (249), le flux d'air chaud (141) étant obtenu par chauffage du second flux d'air interne (249).

8. Véhicule (1) selon la revendication 4, **caractérisé en ce que** l'unité de séchage (135) comprend au moins une cartouche (453) apte à être retirée de l'unité de séchage (135), la cartouche (453) contenant au moins une fraction du matériau (455) absorbeur d'humidité, la cartouche (453) étant destinée à être périodiquement remplacée par une autre cartouche analogue à ladite cartouche (453).

9. Véhicule (1) selon la revendication 3, **caractérisé en ce que** l'unité de séchage (135) comprend un condenseur (353) pour produire le flux d'air (33) moins humide par refroidissement du premier flux d'air interne (137) et condensation d'eau, l'eau retirée (355) étant évacuée en dehors de l'enceinte (15).

10. Procédé d'alimentation ou de commande d'au moins un dispositif électrique (9) d'un véhicule (1) ferroviaire à traction électrique, comprenant au moins une étape d'alimentation ou de commande du dispositif électrique (9) à l'aide d'une pluralité d'appareils électriques (17) à haute tension situés dans une enceinte (15) du véhicule (1), l'enceinte (15) étant non hermétique à l'air ambiant (25) et définissant un volume interne (21) rempli d'air interne,
le procédé étant **caractérisé en ce qu'**il comporte en outre une étape de déshumidification propre à produire un flux d'air (33) moins humide que l'air ambiant (25), ledit flux d'air (33) débouchant dans le volume interne (21), et **en ce que** l'enceinte (15) se situe à proximité d'un toit (13) défini par une caisse (3) du véhicule (1), ou sur le toit (13), ou encore à l'intérieur de ou sous la caisse (15).

## Patentansprüche

1. Schienenfahrzeug (1) mit elektrischem Antrieb, aufweisend wenigstens eine elektrische Vorrichtung (9) und eine Einrichtung (11; 111; 211; 311; 411), wobei die Einrichtung (11; 111; 211, 311; 411) aufweist:
- eine Mehrzahl von elektrischen Geräten (17) hoher Spannung zum Versorgen oder Betätigen der elektrischen Vorrichtung (9), und
- einen nicht gegenüber Umgebungsluft (25) hermetisch abgeschlossenen Raum (15), wobei der Raum (15) die elektrischen Geräte (17) enthält und ein Innenvolumen (21) definiert, das mit interner Luft gefüllt ist,
wobei das Fahrzeug **dadurch gekennzeichnet ist, dass** die Einrichtung (11; 111; 211; 311; 411) ferner eine Entfeuchtungsvorrichtung (19) aufweist, die imstande ist, einen Luftfluss (33) zu produzieren, der weniger feucht ist als die Umgebungsluft (25), wobei der besagte Luftfluss (33) in dem Innenvolumen (21) ausmündet, wobei der Raum (15) sich nahe einem Dach (13), das von einem Gehäuse (3) des Fahrzeugs (1) definiert ist, oder auf dem Dach (13) oder auch im Inneren des oder unter dem Gehäuse (3) befindet.

2. Fahrzeug (1) gemäß Anspruch 1, **dadurch gekennzeichnet, dass** die Entfeuchtungsvorrichtung (19) aufweist ein Druckluft-Aggregat (20) zum Produzieren von getrockneter Druckluft (27) aufgehend von der Umgebungsluft (25), wobei das Druckluft-Aggregat (20) dazu bestimmt ist, das Fahrzeug (1) mit getrockneter Druckluft zu versorgen, wobei die Entfeuchtungsvorrichtung (19) aufweist wenigstens einen Kanal (31) zum Abzweigen wenigstens eines Teils der getrockneten Druckluft (27) und Erlangen des Luftflusses (33), der weniger feucht ist als die Umgebungsluft (25).

3. Fahrzeug (1) gemäß dem Anspruch 1, **dadurch gekennzeichnet, dass** die Entfeuchtungsvorrichtung (19) ein Trocknungsaggregat (135) aufweist, wobei der produzierte Luftfluss (33) hervorgeht aus der Trocknung eines ersten internen Luftflusses (137) in dem Trocknungsaggregat (135).

4. Fahrzeug (1) gemäß Anspruch 3, **dadurch gekennzeichnet, dass** das Trocknungsaggregat (135) wenigstens ein Feuchtigkeitsabsorbier-Material (145; 455) aufweist zum Trocknen des ersten internen Luftflusses (137).

5. Fahrzeug (1) gemäß Anspruch 4, **dadurch gekennzeichnet, dass** das Entfeuchtungssystem (19) aufweist ein Heizorgan (139) zum Produzieren eines Warmluftflusses (141), der dazu bestimmt ist, durch das Feuchtigkeitsabsorbier-Material (145) hindurch zu passieren, um das Feuchtigkeitsabsorbier-Material (145) zu regenerieren, wobei der Warmluftfluss (141) nach außerhalb des Raums (15) abgezogen wird nach seinem Durchgang durch das Feuchtigkeitsabsorbier-Material (145).

6. Fahrzeug (1) gemäß Anspruch 5, **dadurch gekennzeichnet, dass** das Heizorgan (139) konfiguriert ist zum Heizen eines Umgebungsluftflusses (143), wobei der Warmluftfluss (141) erlangt ist durch Heizen des Umgebungsluftflusses (143).

7. Fahrzeug (1) gemäß Anspruch 5, **dadurch gekennzeichnet, dass** das Heizorgan (139) konfiguriert ist zum Heizen eines zweiten internen Luftflusses (249), wobei der Warmluftfluss (141) erlangt ist durch Heizen des zweiten internen Luftflusses (249) .

8. Fahrzeug (1) gemäß Anspruch 4, **dadurch gekennzeichnet, dass** das Trocknungsaggregat (135) aufweist wenigstens eine Kassette (453), die imstande ist, von dem Trocknungsaggregat (135) herausgezogen zu werden, wobei die Kassette (453) wenigstens einen Teil des Feuchtigkeitsabsorbier-Materials (455) enthält, wobei die Kassette (453) dazu bestimmt ist, periodisch ersetzt zu werden durch eine andere Kassette, die zu der besagten Kassette (453) entsprechend ist.

9. Fahrzeug (1) gemäß Anspruch 3, **dadurch gekennzeichnet, dass** das Trocknungsaggregat (135) aufweist einen Kondensator (353) zum Produzieren des Luftflusses (33) geringerer Feuchtigkeit durch Abkühlung des ersten internen Luftflusses (137) und Kondensation des Wassers, wobei das ausfallende Wasser (355) aus dem Raum (15) heraus abgezogen wird.

10. Verfahren zur Versorgung oder zur Betätigung wenigstens einer elektrischen Vorrichtung (9) eines elektrisch angetriebenen Schienenfahrzeugs (1), aufweisend wenigstens einen Schritt des Versorgung oder der Betätigung der elektrischen Vorrichtung (9) mit Hilfe einer Mehrzahl von elektrischen Geräten (17) hoher Spannung, die in einem Raum (15) des Fahrzeugs (1) angeordnet sind, wobei der Raum (15) gegenüber der Umgebungsluft (25) nicht hermetisch abgeschlossen ist und ein Innenvolumen (21) definiert, das mit interner Luft gefüllt ist,
wobei das Verfahren **dadurch gekennzeichnet ist, dass** es ferner aufweist einen Schritt des Entfeuchtens, imstande einen Luftfluss (33) zu produzieren, der weniger feucht ist als die Umgebungsluft (25), wobei der Luftfluss (33) in dem Innenvolumen (21) ausmündet, und dadurch, dass der Raum (15) sich nahe einem Dach (13), das von einem Gehäuse (3) des Fahrzeugs (1) definiert ist, oder auf dem Dach (13), oder auch im Inneren oder unter dem Gehäuse (15) befindet.

## Claims

1. An electrically driven rail vehicle (1) including at least one electrical device (9) and an assembly (11; 111; 211; 311; 411), the assembly (11; 111; 211; 311; 411) comprising:
- a plurality of high-voltage electrical apparatuses (17) for powering or controlling the electrical device (9), and
- an enclosure (15) that is not hermetic with respect to the ambient air (25), the enclosure (15) containing the electrical apparatuses (17) and defining an inner volume (21) filled with inner air,
the vehicle being **characterized in that** the assembly (11; 111; 211; 311; 411) further includes a dehumidifying device (19) capable of producing a flow of air (33) that is less humid than the ambient air (25), the flow of air (33) emerging in the inner volume (21), the enclosure (15) being situated near a roof (13) defined by a body (3) of the vehicle, or on the roof (3), or inside or below the body (3).

2. The vehicle (1) according to claim 1, **characterized in that** the dehumidifying device (19) comprises a compressed air unit (20) for producing compressed and dried air (27) from the ambient air (25), the compressed air unit (20) being designed to supply the vehicle (1) with compressed and dried air, the dehumidifier device (19) comprising at least one channel (31) to withdraw at least a fraction of the compressed and dried air (27) and obtain the flow of air (33) that is less humid than the ambient air (25).

3. The vehicle (1) according to claim 1, **characterized in that** the dehumidifying device (19) comprises a drying unit (135), the produced flow of air (33) resulting from the drying of a first inner flow of air (137) inside the drying unit (135).

4. The vehicle (1) according to claim 3, **characterized in that** the drying unit (135) comprises at least one material (145; 455) absorbing moisture to dry the first inner flow of air (137).

5. The vehicle (1) according to claim 4, **characterized in that** the dehumidifying device (19) comprises a heating member (139) for producing a flow of hot air (141) designed to pass through the moisture absorbing material (145) so as to regenerate the moisture absorbing material (145), the flow of hot air (141) being evacuated outside the enclosure (15) after it passes through the moisture absorbing material (145).

6. The vehicle (1) according to claim 5, **characterized in that** the heating member (139) is configured to heat a flow of ambient air (143), the flow of hot air (141) being obtained by heating the flow of ambient air (143).

7. The vehicle (1) according to claim 5, **characterized in that** the heating member (139) is configured to heat a second inner flow of air (249), the flow of hot air (141) being obtained by heating the second inner flow of air (249).

8. The vehicle (1) according to claim 4, **characterized in that** the drying unit (135) comprises at least one cartridge (453) that can be removed from the drying unit (135), the cartridge (453) containing at least one fraction of the moisture absorbing material (455), the cartridge (453) being designed to be replaced periodically by another cartridge similar to said cartridge (453).

9. The vehicle (1) according to claim 3, **characterized in that** the drying unit (135) comprises a condenser (353) to produce the less humid flow of air (33) by cooling of the first inner flow of air (137) and by condensing water, the removed water (355) being evacuated outside the enclosure (15).

10. A method for powering or controlling at least one electrical device (9) of an electrically driven rail vehicle (1), comprising at least one step for powering or controlling the electrical device (9) using a plurality of high-voltage electrical apparatuses (17) situated in an enclosure (15) of the vehicle (1), the enclosure (15) not being hermetic with respect to the ambient air (25) and defining an inner volume (21) filled with air,
the method being **characterized in that** it further includes a dehumidifying step capable of producing a flow of air (33) that is less humid than the ambient air (25), said flow of air (33) emerging in the inner volume (21), and **in that** the enclosure (15) is situated near a roof (13) defined by a body (3) of the vehicle, or on the roof (3), or inside or below the body (3).
